Europäisches Patentamt

European Patent Office

Office européen des brevets

(11) Veröffentlichungsnummer: **0 293 604**
**A1**

(12) # EUROPÄISCHE PATENTANMELDUNG

(21) Anmeldenummer: 88106895.1

(22) Anmeldetag: 29.04.88

(51) Int. Cl.4: **A61C 5/10** , **A61C 13/225**

(30) Priorität: 04.06.87 DE 8707958 U

(43) Veröffentlichungstag der Anmeldung:
07.12.88 Patentblatt 88/49

(84) Benannte Vertragsstaaten:
**BE DE ES FR GB IT**

(71) Anmelder: **Nova-Pro Attachment GmbH**
**Lindenstrasse 18**
**D-5882 Meinerzhagen(DE)**

(72) Erfinder: **Speckmann, Frank**
**Karl-Halle-Strasse 101**
**D-5800 Hagen(DE)**

(74) Vertreter: **Hassler, Werner, Dr.**
**Postfach 17 04 Asenberg 62**
**D-5880 Lüdenscheid(DE)**

(54) **Profil für eine Schubverteilungsaufnahme an Zahnkronen.**

(57) Gegenstand der Erfindung ist ein Profil als verlorener Kern für eine Schubverteilungsaufnahme an Zahnkronen. Das technische Problem ist die Bereitstellung eines Profils. das in einwandfreier und reproduzierbarer Weise die Herstellung einer Schubverteilungsaufnahme an einer Zahnkrone erlaubt. Das Profil (1) mit Ringsegmentquerschnitt besthet aus einem rückstandslos verbrennbaren Kunststoff und ist in eine Modelliermasse einbettbar.

Fig.2  21

EP 0 293 604 A1

## Profil für eine Schubverteilungsaufnahme an Zahnkronen

Die Erfindung betrifft ein Profil als verlorener Kern für eine Schubverteilungsaufnahme an einer Zahnkrone.

Teilprothesen werden mit Hilfe von Geschieben an Zahnkronen gehalten. Beim Kauen treten infolge der Verformung des Kiefers hohe Schubkräfte innerhalb des Gebisses und der Prothese auf. Diese hohen Schubkräfte können von den Geschieben nicht aufgenommen werden. Infolgedessen werden die Schubkräfte durch Schubverteilungsbügel abgeleitet. Ein Schubverteilungsbügel greift mit einer Klaue in eine Schubverteilungsaufnahme an einer Zahnkrone ein. Die Schubverteilungsaufnahme ist normalerweise als gefräste Rinne im Mantel der Zahnkrone ausgebildet. Derartige Schubverteilungsaufnahmen sind vergleichsweise ungenau und lassen sich an einer fertigen Zahnkrone nur - schwierig herstellen.

Aufgabe der Erfindung ist die Bereitstellung eines Profils, das in einwandfreier und reproduzierbarer Weise die Herstellung einer Schubverteilungsaufnahme an einer Zahnkrone erlaubt.

Diese Aufgabe wird dadurch gelöst, daß das Profil mit Ringsegmentquerschnitt aus einem rückstandslos verbrennbaren Kunststoff besteht und in eine Modelliermasse einbettbar ist.

Das Profil kann vom Zahntechniker auf die jeweils gewünschte Länge zugerichtet werden. Mit Hilfe eines Parallelgeräts wird das Profil ausgerichtet und in die Modelliermasse für die Zahnkrone eingearbeitet. Das Modell der Zahnkrone mit dem Profil wird sodann in einer Gießform in eine Einbettmasse eingebettet. Durch Erwärmen wird das Modell ausgebrannt. Dabei wird auch das Profil rückstandslos verbrannt, so daß es einen verlorenen Kern für die Gießform darstellt. Wenn dann das Gußmetall in die Gießform gegossen wird, so wird der leergebrannte Raum des Modells der Zahnkrone und des Profils vollständig ausgegossen. Das Profil der Schubverteilungsaufnahme wird genau nachgebildet, so daß die Schubverteilungsaufnahme immer die gewünschte, durch das Profil vorgegebene Form hat.

In weiterer Ausbildung der Erfindung erstreckt sich der Ringquerschnitt über mehr als einen Halbkreis. Infolgedessen ist das Profil und damit auch die Schubverteilungsaufnahme hinterschnitten, so daß jeweils ein sicherer Halt des Schubverteilungsbügels gewährleistet ist.

Eine günstige Einformung des Profils in der Modelliermasse der Zahnkrone ist dadurch sichergestellt, daß die Längsseiten des Profils etwa auf einer gemeinsamen Sekannte zu der Kreisfläche des Ringsegments liegen.

Eine funktionsgerechte Anwendung des Profils erhält man dadurch, daß ein Profilabschnitt in die Umfangswandung eines Kronenmodells eingebettet ist.

Eine Ausführungsform der Erfindung wird im folgenden anhand der anliegenden Zeichnung erläutert, in der darstellen:

Fig. 1 Einen Querschnitt des Profils,

Fig. 2 die durch das Profil geformte Schubverteilungsaufnahme in der Wandung einer Zahnkrone und

Fig. 3 die Anwendung der durch das Profil gebildeten Schubverteilungsaufnahme an einem Gebiß.

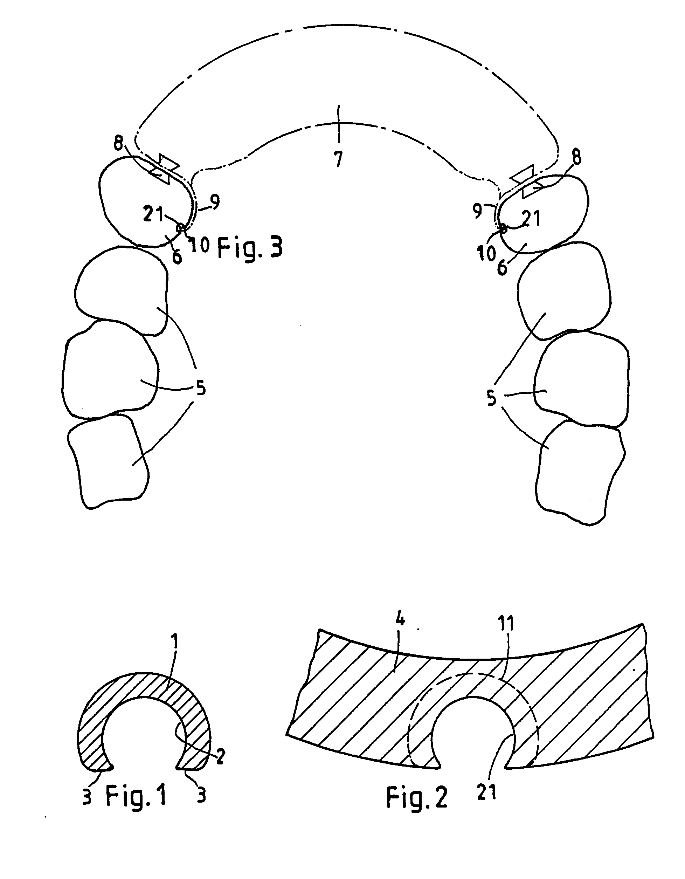

Fig. 1 zeigt das Profil 1 im Querschnitt. Der Querschnitt ist ringsegmentartig und erstreckt sich über mehr als einen Halbring, damit die durch das Profil gebildete Rinne 2 eine Hinterschneidung aufweist. Die Längsseiten 3 des Profils liegen etwa auf einer gemeinsamen Sekannte zu der Kreisfläche des Ringsegments. Dieses Profil 1 besteht aus einem rückstandslos verbrennbaren Kunststoff.

Das Profil 1 läßt sich nach entsprechender Zurichtung bzw. Ablängung in eine Modelliermasse zur Formung des Gußmodells einer Zahnkrone oder Zahnbrücke einbetten. Nach der Formung des Gußmodells wird dasselbe in eine Gußform eingesetzt und mit einer Einbettmasse umhüllt. Diese Einbettmasse füllt dann auch vollständig die Rinne 2 aus.

Das Modell wird vor dem Guß ausgebrannt, wobei auch das Profil 1 rückstandslos verbrennt. Die Gußmasse wird in die Gußform eingefüllt, so daß die Zahnkrone ausgebildet wird.

Fig. 2 zeigt einen Schnitt durch die Wandung 4 der Zahnkrone. In dieser Wandung 4 ist die Rinne 21 ausgebildet, die genau der Rinne 2 des Profils entspricht. Die Lage des Profils vor dem Ausbrennen ist durch eine gestrichelte Linie 11 angegeben. Der Raum innerhalb der gestrichelten Linie 11, der vor dem Ausbrennen des Modells durch das Profil 1 ausgefüllt war, ist nunmehr vollständig durch die Gußmasse gefüllt.

Somit ist die Schubverteilungsaufnahme maßgetreu, wie durch das Profil 1 vorgeformt, in der Wandung 4 der Zahnkrone ausgebildet. Da die Rinne 21 der Schubverteilungsaufnahme immer eine gleiche Form hat, die durch die Rinne 2 des Profils 1 vorgegeben ist, ist sichergestellt, daß die Klaue eines Schubverteilungsbügels immer einen formschlüssigen Halt innerhalb der Schubverteilungsaufnahme findet.

Fig. 3 erläutert die Anwendung der Schubverteilungsaufnahme innerhalb eines Gebisses. Man erkennt die Zähne 5 des Restgebisses, wobei mindestens die Kronen 6 vorhanden sind. Eine Teilprothese 7 ist zwischen den Kronen 6 verankert. Hierzu dienen einmal schematisch dargestellte Geschiebe 8 und zum anderen Schubverteilungsbügel 9, die jeweils mit einer Klaue 10 in eine Rinne 21 in der Wandung der jeweiligen Krone 6 eingreifen.

Derartige Schubverteilungsaufnahmen mit Hilfe des Profils nach der Erfindung lassen sich selbstverständlich auch an anderen Gußteilen des Restgebisses anbringen wie Brücken und dergleichen.

## Ansprüche

1. Profil als verlorener Kern für eine Schubverteilungsaufnahme an Zahnkronen, dadurch gekennzeichnet, daß das Profil (1) mit Ringsegmentquerschnitt aus einem rückstandslos verbrennbaren Kunststoff besteht und in eine Modelliermasse einbettbar ist.

2. Profil nach Anspruch 1, dadurch gekennzeichnet, daß sich der Ringsegmentquerschnitt über mehr als einen Halbring erstreckt.

3. Profil nach Anspruch 1 oder 2, dadurch gekennzeichnet, daß die Längsseiten des Profils (1) etwa auf einer gemeinsamen Sekante zu der Kreisfläche des Ringsegments liegen.

4. Profil nach einem der Ansprüche 1 bis 3, dadurch gekennzeichnet, daß ein Profilabschnitt in die Umfangswandung eines Kronenmodells eingebettet ist.

Fig. 3

Fig. 1

Fig. 2

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-1 566 198 (BILEK)<br>* Beschreibung; Figuren *<br>--- | 1-4 | A 61 C 5/10<br>A 61 C 13/225 |
| Y | US-A-3 228 106 (RITTER)<br>* Spalte 2, Zeilen 37-59; Figuren 1,3,5 *<br>--- | 1-4 | |
| A | GB-A- 162 344 (SUPPLEE)<br>* Figuren 3,4,6 *<br>----- | 2,3 | |

RECHERCHIERTE SACHGEBIETE (Int. Cl.4)

A 61 C

Der vorliegende Recherchenbericht wurde für alle Patentansprüche erstellt

| Recherchenort | Abschlußdatum der Recherche | Prüfer |
|---|---|---|
| DEN HAAG | 09-09-1988 | VANRUNXT J.M.A. |

EPO FORM 1503 03.82 (P0403)